# EUROPEAN PATENT APPLICATION

(11) **EP 0 863 661 A2**
(43) Date of publication of application: **09.09.1998**
(21) Application number: 98301608.0
(22) Date of filing: 04.03.1998
(51) Int. Cl.: H04N 1/40

(54) **Fast error diffusion algorithm**

(30) Priority: 06.03.1997 US 812777
(71) Applicant: Hewlett-Packard Company, Palo Alto, California 94304 (US)
(72) Inventor: Chen, Yidong, Rockville, MD 20850 (US); Miller, Steven O., Vancouver, WA 98682 (US)
(74) Representative: Colgan, Stephen James

(57) **Abstract**

Disclosed is a fast error diffusion algorithm for converting a 8-bit per pixel per color image to a binary (1-bit per pixel per color) image suitable for output on a standard hardcopy output device such as an inkjet printer. The method uses two-term error diffusion with a series of relatively low thresholds. The series of thresholds is established using blue noise. The rows of the image are processed in a serpentine manner, with adjacent rows being processed in alternating directions.

## Description

### BACKGROUND OF THE INVENTION

### Field of the Invention

The present invention relates to a method of image processing, and more particularly to such a method using two-term error diffusion in which the thresholds are modulated with blue noise and the image rows are processed in a serpentine fashion.

### Statement of the Art

Images, such as charts, drawings and pictures may be represented electronically as a two-dimensional matrix of picture elements (pixels). The spatial resolution and intensity level for each pixel are chosen to correspond to the particular output device used. For example, typical computer monitors display images at 75 dots per inch (DPI) and have 256 levels of intensity for each color. Such monitors use the additive primary colors red, green, and blue (RGB), which can be combined to produce millions of colors and also black.

Typical hardcopy output devices (such as inkjet printers) are binary devices, meaning that for each pixel location on the printed medium, they can only print at two levels: on or off. Therefore, some means must be provided to convert the monitor-based version of the image (256 intensity levels per color) to the binary version (2 levels per color). These conversion methods are commonly referred to as halftoning. Halftoning methods are described in Ulichney, *Digital Halftoning* (The MIT Press, 1987).

There are two basic types of halftoning: dithering and error diffusion. Dithering is referred to as a "point" process, because a decision is made for each pixel whether or not a dot will be printed, and this decision is independent of any other pixels in the image. In dithering, a two-dimensional matrix is of previously chosen thresholds is "tiled" over the image. At each point in the image, the intensity of the image pixel is compared against the corresponding threshold value in the dithering cell. If the image pixel intensity is greater than the threshold, a dot is printed. If not, no dot is printed.

The dithering cell is stored in memory and is typically sized on the order of 2ⁿ, with common cell sizes being, for example, 8, 16, 64, and 128 pixels. The cell is populated with threshold numbers ranging from the lowest to the highest potential intensity for the image pixels. It is well known in the art to use a semi-random set of thresholds that are produced using "blue noise" (discussed below). Advantages of the dither cell technique are that it is fast and produces good results, depending on the actual dither cell used.

The other major approach to halftoning is error diffusion. In contrast to dithering, error diffusion is not a point process, but a neighborhood operation. The decision about whether or not to print a dot is made based not only on the image pixel intensity for that pixel, but on what has happened before for previously processed pixels. The present invention is directed to an error diffusion technique.

In error diffusion, at each point, the image pixel intensity is compared to a previously chosen threshold value. If the image pixel intensity is greater than the threshold value, a dot (100% intensity) is assigned to that pixel. If not, no dot (0% intensity) is assigned. In either case, the difference between the actual value assigned and the image pixel intensity for that point is derived, and this difference becomes an error term that is "diffused" to other subsequently processed pixels. In the subsequently processed pixels, the error term is added to the image pixel intensity of the other pixels, and this total resultant image pixel intensity is used to compare against the error diffusion threshold. A typical threshold value is 50% of the maximum theoretical image pixel intensity. For example if there are 256 intensity levels (0 to 255) per pixel, a level of 128 may be chosen as the threshold value.

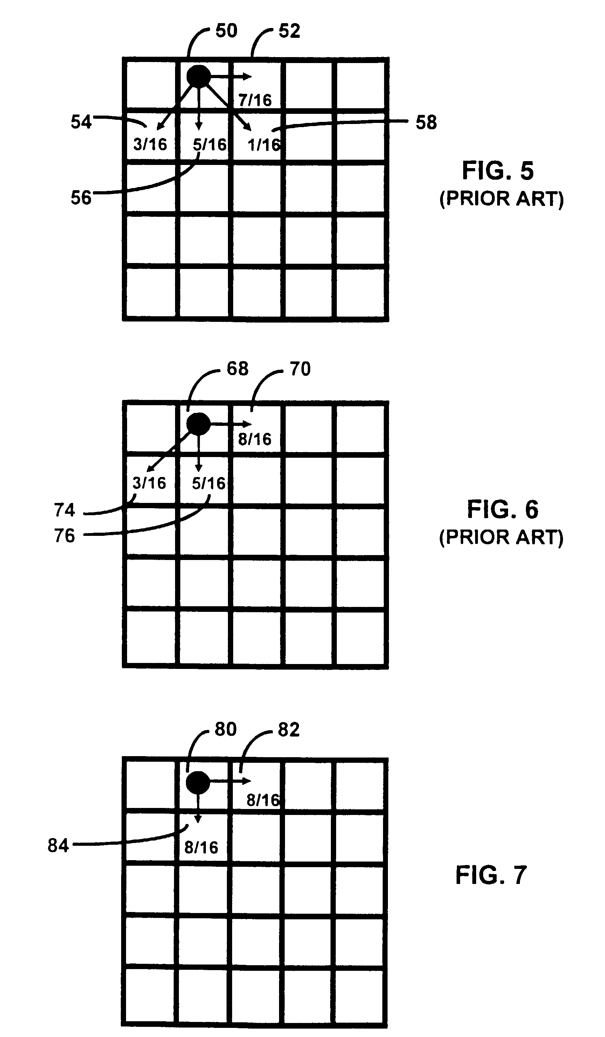

A well known error diffusion technique is described in R. Floyd and L. Steinberg, Adaptive Algorithm for Spatial Grey Scale' SID Int'l. Sym. Digest of Tech. Papers, pp. 36-37 (1975). The Floyd and Steinberg error diffusion technique (illustrated in Fig. 5) diffuses the error into a set of four surrounding pixels. The proportion of the total error diffused into neighboring pixels is 7/16, 1/16, 5/16, and 3/16 in the respective pixels, as shown. This is referred to as four-term error diffusion, because the error is divided into four components and spread into four different pixels. Error diffusion with higher than four terms can also be used.

One problem with error diffusion is that it is computationally intensive, and therefore time consuming. Even with the four-term Floyd and Steinberg approach, the steps of threshold comparison, dividing of error, and adding the error to the surrounding pixels may take an unacceptably long time for the entire image.

Another problem with standard error diffusion algorithms is that visible patterns can develop in the printed output, especially in areas of light area fill. These patterns occur because of the way the error can "cascade" through the image to produce curved lines of printed dots. These anomalies are often referred to as "worms" because they can resemble small thin worms in the image.

Yet another problem with error diffusion is referred to as "start-up defects." In the method described above, with a threshold of 128 (50% of the maximum 256), a dot will only print when the resultant intensity level (the original image intensity plus any error term) is greater than 128. Thus, with a low intensity level image, for example a level of 16 out of a maximum 256, several dots must be processed before enough error is built up so that the "resultant" image pixel intensity will exceed the threshold. In the actual image, this results in a light or white area at the upper left side of the image (assuming a left to right processing direction).

US Patent No. 5,313,287 (the 'Barton" patent), assigned to the present assignee, discloses an error diffusion technique designed to solve some of the above mentioned problems. This patent discloses a technique in which the direction of processing the image rows is randomized by "blue noise." In other words, rather than processing each row of the image strictly from left to right or right to left, the processing is done in a semi-random manner. If the processing direction were chosen on a purely random basis, the randomization would be based on what is called "white noise." Blue noise is white noise that is "high pass filtered." In the technique discussed, the blue noise filter dictates that no more than three rows of pixels can be processed in the same direction. The reason white noise is not good is that white noise allows "clumping" of results. Although it may not be intuitively obvious, a purely random selection among an allowed set of numbers will invariably allow the same result to be repeated in close sequence. For example, a purely random selection of process directions could produce a result in which the same process direction is used many times in a row, resulting in visual artifacts in the printed image.

Another aspect of the Barton method is that the same threshold is not used throughout the image. Instead, a series of blue noise thresholds is used. This means that the series of thresholds is randomized over an accepted range, but a filter is used to avoid using the same threshold twice in close proximity. For example, if the threshold 10 is used once, the blue noise filter seeks to avoid using 10 again for the threshold until other thresholds are used, so as to space out when this threshold is used. If the selection of thresholds were purely randomized from a set of allowed thresholds, white noise would occur. Again white noise is not desirable because clumping can result. In this case, the clumping would result in the same threshold being used more than once in close proximity, potentially resulting in worms or other artifacts in the printed image.

In addition to modulation of thresholds, the Barton patent discloses the use of relatively low thresholds. The use of relatively low thresholds also reduces start-up defects, because a low threshold allows a dot to be printed earlier. In other words, it takes less error to build up before a pixel will have enough resultant intensity value to exceed the threshold. Finally, the Barton method uses three-term error diffusion. This is one term less than classic Floyd and Steinberg error diffusion. It was found that reducing the error diffusion by one term increased processing speed.

The current market for binary printers is very competitive, and image quality and speed are important components of that competition. A printer developer is tempted to resort to a dither-based halftoning to achieve greater processing speed. However, the developer also seeks the superior image quality that can be achieved with error diffusion. There remains a need for an error diffusion technique allowing for greater processing speed, while at the same time achieving superior image quality.

### SUMMARY OF THE INVENTION

The present invention provides a method of processing an image composed of image pixels, each image pixel having a predetermined intensity level. The method uses error diffusion to process the image for output on a digital output device. The method consists of the following steps: (a) providing each image pixel with a resultant intensity level determined by the predetermined intensity level plus an error term; (b) providing a series of thresholds that are modulated in a blue noise fashion; (c) comparing the resultant intensity level of one image pixel against one of the blue noise thresholds; (d) assigning a binary intensity level of one dot (100% intensity) for the pixel if the resultant intensity level exceeds the threshold, and assigning a binary intensity level of no dot (0% intensity) if the resultant intensity level is less than the threshold; (e) finding the difference between the binary intensity level and the resultant intensity level; (f) dividing the difference into two error terms and diffusing the error terms to two adjacent pixels, the error terms being added to the resultant intensity levels of the adjacent pixels; and (g) processing each image pixel of the image by performing steps (c) through (f) on each image pixel in each row of the image (using the thresholds in series), and alternating the direction of processing adjacent rows to thereby process the rows in a serpentine fashion.

The present invention provides superior image quality, while at the same time achieving enhanced processing speed over prior known error diffusion methods.

### BRIEF DESCRIPTION OF THE DRAWINGS

Fig. 1 is a schematic illustration of a printing system of the invention.

Fig. 2 is a block schematic diagram of a typical image processing system.

Fig. 3 is a diagram illustrating a portion of an image having a uniform intensity level of 175.

Fig. 4 is a diagram illustrating a portion of an image having a uniform intensity level of 16.

Fig. 5 is a diagram illustrating the Floyd and Steinberg error diffusion method.

Fig. 6 is a diagram illustrating the Barton error diffusion method.

Fig. 7 is a diagram illustrating the error diffusion method of the present invention.

### DETAILED DESCRIPTION OF THE ILLUSTRATED EMBODIMENT

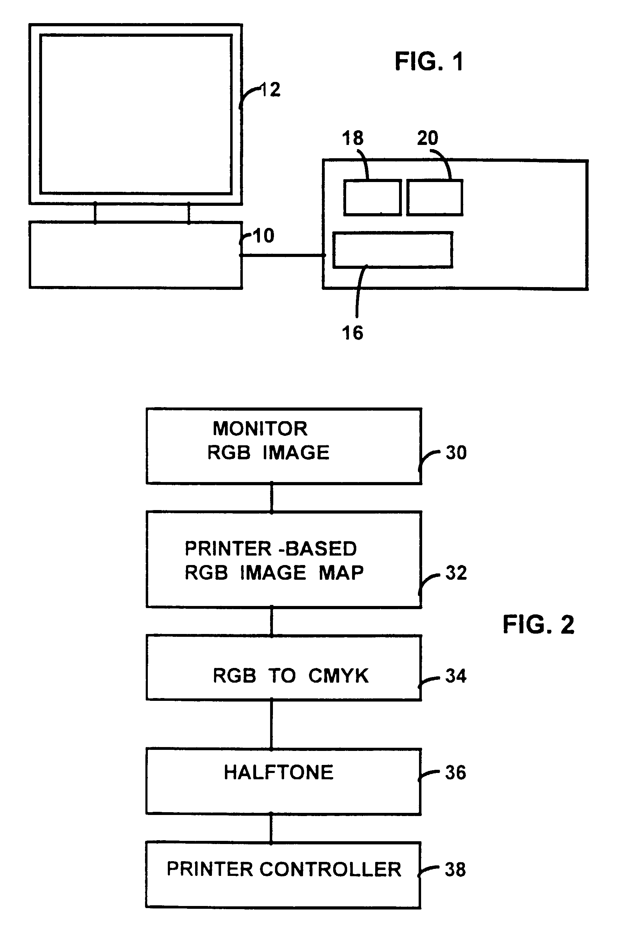

Fig. 1 is a schematic diagram of a printing system of the invention. This system includes a host computer 10, monitor (CRT) 12, and printer 14. Printer 14 includes a printer controller 16 and print cartridges 18 and 20. In the disclosed embodiment, print cartridges 18 and 20 are scanning print cartridges. In other words, they are driven back and forth across a print swath over the print medium (e.g., paper), and the print medium is driven through the printer. In this way, the entire print region of the page can be addressed to fill the region with text or graphics. Print cartridge 18 is a 300 dot-per-inch (DPI) three-chamber cartridge containing three types of ink: cyan (C), magenta (M), and yellow(Y). Print cartridge 20 also prints at 300 DPI and contains black (K) ink.

Fig. 2 illustrates the standard flow of image information from the computer 10 to the printer 14. An image is first created or introduced into the memory of computer 10. To be displayed on the computer monitor 12, this image is represented in additive RGB color space. Each pixel on the screen can be illuminated in each color red, green and blue at any one of 256 (0 to 255) levels of intensity. The three colors can be combined in their respective 256 levels to produce over 16 million potential colors at each pixel. It takes 8 bits to represent 256 levels (2⁸ = 256). Each of the three primary colors require 8 bits; therefore, RGB color monitors are commonly referred to as producing 24-bit color (3 X 8 = 24). This image is represented at the spatial resolution of the particular monitor. Typical monitors have 75 pixels per linear inch (75 DPI) in both vertical and horizontal directions.

At step 30, the 24-bit RGB color image is held in memory of computer 10 so that it can be displayed on monitor 12. At step 32, image 30 is converted to a 24-bit RGB image at the resolution of the printer. Typical ink-jet printers have a resolution of 300 dots per inch. However, some inkjet printers have resolutions of 600 DPI or even 1200 DPI. Although the printer typically prints in CMY or CMYK subtractive colors, it is nevertheless convenient for image processing purposes at step 32 to consider the printer to be an RGB device. This is because three dimensions are sufficient to describe the color space of a device, and if the attempt is made to match the color monitor RGB values directly to CMYK, there will be numerous combinations of CMYK that will produce a colorimetric match. However, not all of the matching values will produce the same image quality. Some choices will contain more visual noise than others, while other choices may lead to undesirable discontinuities in the halftone transitions of an image.

At step 34, the present invention converts the printer RGB color image into CMYK color space. In step 36, the image is halftoned to convert the image from 4-plane 8-bit per color to 4-plane digital color. At step 38, the image is transmitted to the printer, typically using an efficient communication process, such as by using escape sequences such as those used by Hewlett-Packard Company's Printer Control Language (PCL). The image produced at step 36 includes all of the information about how many dots of each color are printed at each pixel on the page. The printer controller decides when these dots should be printed, i.e., in a single pass, or in multiple passes. Because of the nature of inkjet printing, it is often beneficial to lay down dots in more than a single pass, and to print individual passes in some kind of checkerboard or other sparse pattern. It is also beneficial to overlap passes with these interstitial patterns to hide artifacts that may occur between swaths. These procedures for determining in what pass and in what pattern the dots will be laid down are referred to as "print modes."

The halftoning step 36 is now described. The maximum theoretical image intensity per pixel in Fig. 1 is 255. Thus, there are 256 different available intensities that can be represented. i.e. from 0 to 255. The problem in translating such images to hardcopy printout on such binary printers is how to take an image from 256 intensity levels per pixel to only 2 levels per pixel. Halftoning refers to the techniques used to make this translation. Halftoning is divided into two major classes, dithering and error diffusion. Dithering is described briefly above. The present invention is directed to error diffusion.

It will be understood that, depending on the printer, various of the functions discussed in relation to Fig. 2 can be performed in the host computer or in the printer. For example, in a "smart" printer, steps 32 through 38 could all be performed in the printer. On the other hand, to save memory costs in the printer, in a "sleek" printer, all or part of the functions 30 through 38 could be performed in the host computer.

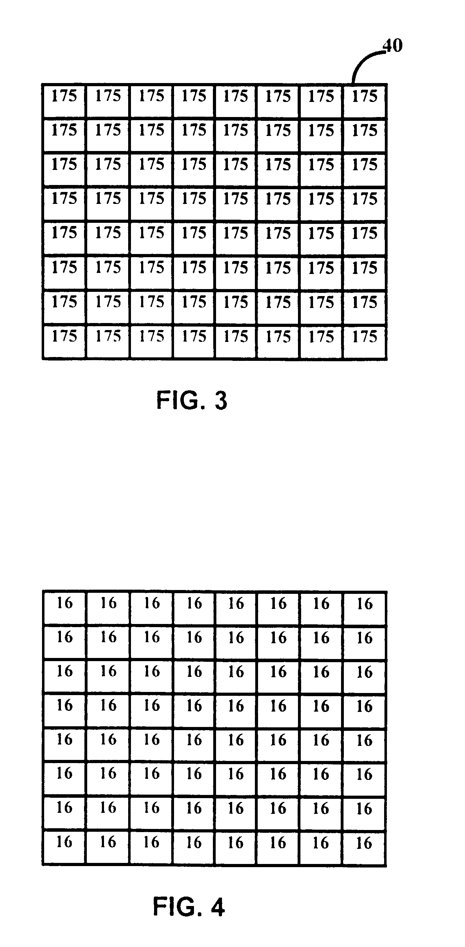

Figs. 3 and 4 illustrate a portions of an image stored in computer memory. This image might be a graph, chart, picture or text. The portion of the image shown in has a uniform intensity level of 175, as shown, for example at pixel 40. Fig. 4 shows a different part of the image having a much lighter tone, with a uniform intensity level of 16. As mentioned above, images are typically displayed on computer monitors in additive red, green, blue (RGB) format. The intensity levels shown are the intensity for the particular color represented. A separate image representation for the image is stored for each of the colors. Thus, the image is said to be in a three planes, with each of the colors being a separate plane. In this disclosure, only a single intensity will be discussed, with the understanding that the same procedure is followed for the other colors. Indeed, it would be possible to use this method with a single color, for example black, imaging system.

Error diffusion attempts to recognize that for each point, there is usually a difference between what the hardcopy output device will print and the actual image pixel intensity. The only time there is no such error is if the image pixel intensity is exactly 255 (a dot should be printed) or 0 (no dot should be printed). However, such circumstances are rare. Therefore, there is usually an error. If a dot is printed, and the intensity level is less than 255, the error is positive, i.e., more tone level has been printed than was actually called for by the image pixel. If no dot is printed, and the image pixel is greater than zero, the error is negative i.e., less tone level has been printed than was called for by the image pixel. Error diffusion attempts to spread this error to neighboring pixels.

Fig. 5 illustrates the classic Floyd and Steinberg error diffusion technique. Each small square represents one pixel in the image. Pixel 50 is the current pixel being processed. At this point, the method compares the actual image intensity to a threshold intensity level. A common threshold is 128, which is a 50% intensity over a 256 level intensity system. If the image pixel intensity is less than this threshold, a dot is assigned to that pixel. In other words, the printer will eventually print a dot at that point. (Of course at this stage, the image is just being processed by the computer or printer. The printing will come later.) If the image pixel intensity is less than the threshold, no dot will be printed. In either case, there will likely be an error between the image pixel intensity and what actually happens at that pixel. For example, assume a unifier intensity level of 175 (as in Fig. 3), this intensity exceeds the threshold of 128, so that a dot will be printed in pixel 50. The printing of a dot means that an intensity of 255 (100% intensity) is actually assigned to that pixel. The error between the actual image pixel intensity and the assigned value (the binary intensity) is -80 (175 - 255 = -80).

This error of -80 is spread among subsequently processed neighboring pixels as shown. Pixel 52 receives 7/16 of this error, pixel 54 receives 3/16, pixel 56 receives 5/16, and pixel 58 receives 1/16. Pixel 52 would thus receive an error term in the amount of -35 (7/16 X -80 = -35). This error term is added to the actual image intensity for that pixel. Since the image intensity for pixel 52 is also 175, the method adds the assigned error term to achieve a resultant intensity for pixel 52 of 140 (175 - 35 = 140). Without the error term, a dot would have been printed. However, in this case the error term from a previously printed dot reduces the resultant image intensity level, resulting in no dot being printed. In this way, the technique attempts to compensate for the binary nature of the printing device. Each pixel in the image is processed in this manner until the image has been completely processed.

This error diffusion technique assumes that the image is processed from left to right in each row of the image. This processing method results in a problem know as "start up defects." If the image has a low intensity level, such as that shown in Fig. 4, with a uniform level of 16, the first pixel processed (pixel 50) would result in no dot printed (0% intensity), because 16 is less than 128. The error would 16 - 0 = 16. 7/16 of this error would be added to the next pixel 54, to give the resultant intensity of pixel 54 of 23 (16 + 7 = 23). When pixel 52 is processed, still no dot is printed, and the error is then 23 (23 - 0 = 23). 7/16 ofthis error (=10.06) will be added to the next pixel 60 for a total resultant pixel intensity of 26.6 (16 + 10.6 = 26.6). As can be seen, it will take several dots for enough error to build up so that the resultant pixel intensity will exceed the threshold of 128. This results in no dots being printed at the left side of the image row. These start up defects are known to cause a white or light area to occur in the upper left corner of printed images.

Another problem with standard error diffusion algorithms is that visible pattems can develop in the printed output, especially in areas of light area fill. These patterns occur because of the way the error can "cascade" through the image to produce curved lines where dots are printed. These anomalies are often referred to as "worms" because they can resemble small thin worms throughout the image. Also, error diffusion is computationally intensive, and therefore is time consuming. Yet the modern printer marketplace demands faster and faster printers.

Fig. 6. illustrates the three-term error diffusion disclosed in the Barton patent (US Patent No. 5,313,287), discussed above. This technique attempts to avoid some of the problems usually associated with error diffusion. Any error derived from processing the current pixel (pixel 68) is diffused to three of the neighboring pixels, as shown. The error is diffused 8/16 to subsequent horizontal pixel 70, 5/16 to adjacent vertical pixel 76, and 3/16 to diagonally adjacent pixel 74. The use of three-term error diffusion, as opposed to four-term, speeds up processing time.

In addition, the Barton technique randomizes the direction of processing the image. Rather than process the image strictly from left to right, the direction of processing is semi-random so that over long term, roughly half of the image rows will be processed from left to right and half from right to left. This randomization helps avoid problems of start-up delay and worms.

The randomization uses "blue noise" rather than "white noise." This means that the process direction is randomized, but the blue noise filter does not allow that more than three rows in sequence may be processed from the same direction. A pure randomization would produce white noise. Although it may be counter-intuitive, white noise allows some amount of "clumping" to occur, meaning that the same result can be closely spaced in time or space. Pure randomization does not assure that the same or very similar results will be spread out. Blue noise is essentially white noise that is "high pass filtered" to assure that clumping does not occur.

In addition, the Barton method uses a relatively low threshold level, and the thresholds are also randomized using blue noise. The thresholds are low so that in an area of low image intensity, it will require less error to build up to exceed the threshold to thereby print a dot. Thus start-up defects will be decreased. The threshold densities are randomized to also help avoid worms and other print anomalies.

Fig. 7 illustrates the error diffusion method of the present invention. As can be seen, this technique uses two-term error diffusion. Any error derived from the pixel being processed (e.g., pixel 80) is diffused to the subsequent horizontal pixel 82 and to the adjacent vertical pixel 84. The proportion of the error diffused is 8/16 (50%) to each of these adjacent pixels.

After each row of the image is processed, the direction of processing is reversed. In other words, the disclosed method uses a pure serpentine processing system. The Barton patent says that a serpentine process has been suggested as a way of avoiding "directional hysteresis," but that a serpentine can introduce visible patterns or anomalies that would otherwise not be present in the rendered image. (See column 1, lines 38-51). The blue noise raster is therefore suggested. Contrary to the teaching of Barton, the present inventors have found that a serpentine raster with the other characteristics of the present invention produces very good printout image quality, while at the same time providing a very fast error diffusion algorithm.

In the disclosed method the threshold levels are chosen to be relatively low, and the threshold levels are modulated with blue noise. The low-level thresholds reduce start-up delays and the modulated thresholds additionally break up any worms. The threshold modulation is a 256 element linear array or series of random threshold values ranging from 5 to 68 for a total of 64 levels. The following Table I includes the threshold levels used.

**Table 1**

| | | | | | | | | | | | | | |
|---|---|---|---|---|---|---|---|---|---|---|---|---|---|
| 5 | 49 | 15 | 32 | 59 | 26 | 47 | 16 | 50 | 10 | 56 | 43 | 22 | 63 |
| 27 | 68 | 39 | 8 | 55 | 20 | 60 | 24 | 67 | 19 | 37 | 58 | 16 | 45 |
| 11 | 54 | 25 | 36 | 66 | 5 | 53 | 30 | 62 | 8 | 33 | 52 | 23 | 62 |
| 30 | 46 | 14 | 44 | 32 | 40 | 12 | 46 | 29 | 59 | 10 | 47 | 34 | 6 |
| 58 | 38 | 26 | 49 | 17 | 38 | 21 | 43 | 18 | 64 | 21 | 66 | 42 | 18 |
| 63 | 9 | 67 | 31 | 48 | 57 | 13 | 50 | 35 | 55 | 13 | 28 | 52 | 33 |
| 56 | 23 | 40 | 7 | 34 | 61 | 28 | 6 | 40 | 33 | 60 | 24 | 11 | 41 |
| 15 | 65 | 25 | 53 | 19 | 67 | 45 | 17 | 50 | 8 | 68 | 45 | 36 | 48 |
| 32 | 61 | 11 | 43 | 14 | 31 | 48 | 22 | 56 | 38 | 27 | 5 | 55 | 13 |
| 37 | 57 | 28 | 52 | 65 | 9 | 62 | 35 | 15 | 54 | 44 | 25 | 59 | 22 |
| 46 | 7 | 36 | 26 | 37 | 42 | 21 | 65 | 31 | 16 | 64 | 10 | 41 | 18 |
| 51 | 39 | 15 | 63 | 12 | 51 | 7 | 59 | 43 | 23 | 35 | 68 | 30 | 62 |
| 20 | 45 | 29 | 58 | 24 | 47 | 29 | 12 | 39 | 54 | 16 | 49 | 9 | 33 |
| 65 | 5 | 34 | 56 | 19 | 67 | 34 | 50 | 6 | 63 | 22 | 38 | 53 | 19 |
| 60 | 41 | 13 | 53 | 8 | 60 | 21 | 57 | 27 | 44 | 66 | 14 | 48 | 37 |
| 23 | 49 | 28 | 44 | 26 | 46 | 17 | 41 | 11 | 30 | 57 | 27 | 10 | 68 |
| 17 | 54 | 20 | 66 | 9 | 64 | 25 | 61 | 36 | 7 | 52 | 39 | 32 | 61 |
| 6 | 58 | 24 | 51 | 29 | 55 | 20 | 42 | 64 | 18 | 51 | 12 | 42 | 31 |
| 40 | 35 | 14 | 47 | | | | | | | | | | |

This table is not a two-dimensional array, but is a listing or series of thresholds that is used one at a time. Once this series is used up, it is repeated over as many times as necessary to provide comparison thresholds for each pixel in the image, using the serpentine processing method discussed. All of these numbers are between 5 and 68, and each number is repeated four times.

The actual number of thresholds used is preferably chosen so that the number of thresholds is not synchronous with the number of image pixels in the image. In other words, the number of pixels used does not have a repeating period with the number of pixels. This non-synchronous relationship helps insure that undesirable artifacts are not introduced into the image. This set of 256 threshold levels would work with any image pixel width that is non-synchronous with 256. For example, an image having a pixel width of 1950 dots (6.5 inches at 300 DPI) would be non-synchronous with 256.

The average intensity levels for these thresholds is chosen to be relatively low to alleviate start-up defects. The average intensity level for these thresholds is 36.5, which is about 14% of the maximum allowed level of 256. A preferred average intensity level for the thresholds is less than about 20%. A highly preferred average intensity level for the thresholds is less than about 15%.

Thus the invention provides a very fast error diffusion algorithm, using only a two-term error diffusion, that also provides superior image quality and minimizes print defects commonly associated with error diffusion, such as start up defects and worms.

## Claims

1. A method of processing an image composed of image pixels arranged in a matrix pattern of rows, each such image pixel having a predetermined intensity level, the method using error diffusion to process said image for output on a digital output device and comprising the steps of:
(a) providing each said image pixel with a resultant intensity level determined by said predetermined intensity level plus an error term;
(b) providing a series of thresholds that are modulated in a blue noise fashion;
(c) comparing the resultant intensity level of one of said image pixel against one of said blue noise thresholds;
(d) assigning a binary intensity level of one dot (100% intensity) for said pixel if said resultant intensity level exceeds said threshold, and assigning a binary intensity level of no dot (0% intensity) if said resultant intensity level is less than said threshold;
(e) finding the difference between said binary intensity level and said resultant intensity level;
(f) dividing said difference into two error terms and diffusing said error terms to two adjacent pixels, said error terms being added to the resultant intensity levels of said adjacent pixels; and
(g) processing each image pixel of said image by performing steps (c) through (f) on each said image pixel in each row of said image (using said thresholds in series), and altemating the direction of processing adjacent rows to thereby process said rows in a serpentine fashion.

2. A method according to claim 1, wherein said error is diffused to the adjacent horizontal pixel in the direction of processing and to the adjacent vertical pixel below the pixel currently being processed.

3. A method according to claim 1, wherein said error is diffused 1/2 to said adjacent horizontal pixel and 1/2 to said adjacent vertical pixel.

4. A method according to claim 1, wherein said thresholds have an average value of less than 20% of a full available intensity levels for said image pixels.

5. A method according to claim 1, wherein said thresholds have an average value of less than 15% of the full available intensity levels for said image pixels.

6. A method according to claim 1, wherein the number of said thresholds is non-synchronous with the number of said thresholds.

7. A method of processing an image using error diffusion, comprising:
(a) providing an image composed of a matrix of image pixels arranged, said image pixels being arranged in a series of horizontal rows, each of said image pixels having a corresponding image intensity level;
(b) providing each of said image pixels with a resultant intensity level composed of said image intensity level plus an error term;
(c) providing a series of thresholds that are modulated in a blue noise fashion;
(d) processing each pixel in each row of said image in horizontal sequence by comparing said resultant intensity level of said image pixel against the next threshold in said series;
(e) assigning an output intensity level of 100% intensity to said pixel if said resultant intensity exceeds said threshold, and assigning an output intensity level of 0% intensity if said resultant intensity does not exceed said threshold;
(f) determining the difference between said output intensity level and said resultant intensity level;
(g) dividing said difference into two error terms and diffusing said error terms in two-term error diffusion to an adjacent horizontal and vertical pixel;
(h) processing said rows of said image by performing steps (d) through (g) in alternating horizontal directions along said rows, to thereby process said rows of said image in a serpentine fashion.

8. A method according to claim 7, wherein said error is diffused to the adjacent horizontal pixel in the direction of processing and to the adjacent vertical pixel below the pixel currently being processed.

9. A method according to claim 8, wherein said error is diffused 1/2 to said adjacent horizontal pixel and 1/2 to said adjacent vertical pixel.

10. A method according to claim 9, wherein said image pixels have a maximum theoretical value and wherein said thresholds have an average intensity level that is less than about 20% of said maximum theoretical value.

11. A method according to claim 9, wherein said image pixels have a maximum theoretical value and wherein said thresholds have an average intensity level that is less than about 15% of said maximum theoretical value.

12. A method according to claim 11, wherein said series of thresholds does not have a repeating period with the number of image pixels in said rows of said image.
